# EUROPÄISCHE PATENTANMELDUNG

(11) **EP 2 016 819 A1**
(43) Veröffentlichungstag der Anmeldung: **21.01.2009**
(21) Anmeldenummer: 08012470.4
(22) Anmeldetag: 10.07.2008
(51) Int. Cl.: A01D 33/04

(54) **Kartoffelerntemaschine**

(30) Priorität: 20.07.2007 DE 102007034446
(71) Anmelder: Grimme Landmaschinenfabrik GmbH & Co. KG, 49401 Damme (DE)
(72) Erfinder: Kalverkamp, Klemens, D-49401 Damme (DE)
(74) Vertreter: Pott, Ulrich

(57) **Zusammenfassung**

Eine Kartoffelerntemaschine weist eine ein- oder mehrreihige Rodevorrichtung (4) auf, an die sich ein ein Gemisch (G) aus Knollen (K) als Erntegut mit Steinen, Kluten u. dgl. Beimengungen (S) aufnehmendes Siebförderband (5,5') anschließt. Von diesem aus wird das geförderte Gemisch einem Trennaggregat (7) übergeben, das zumindest ein eine Trennstrecke (T) definierendes Trenngerät (8) aufweist, von dem aus im wesentlichen nur noch die Knollen auf ein Verleseband (9) ausfördbar sind. Das Trennaggregat ist erfindungsgemäß so ausgebildet, daß im Bereich vor der Trennstrecke das Gemisch in zumindest zwei im wesentlichen nur Knollen oder im wesentlichen nur Steine und Kluten enthaltende Teilförderströme (F,F') vortrennbar ist.

## Beschreibung

Die Erfindung betrifft eine Kartoffelerntemaschine, insbesondere in Form eines von einem Zugfahrzeug gezogenen Bunkerroders, gemäß dem Oberbegriff des Anspruchs 1.

Bekannte Kartoffelerntemaschinen dieser Art (DE 35 29 464 C1, /1/) weisen mehrere an eine Rodevorrichtung anschließende Siebförderbänder auf, von denen aus das Gemisch aus Erntegut, Steinen, Kluten o. dgl. Beimengungen zu obenliegenden Trennvorrichtungen verlagert wird. Bei einer am Markt befindlichen Kartoffelerntemaschine (Grimme Landmaschinenfabrik GmbH & Co. KG, Firmenprospekt SE 150, B/5542-2006, /2/) bilden mehrere der Trenngeräte ein komplexes Trennaggregat, bei dem drei Trenngeräte mit jeweiligen Teiltrennstrecken eine Förderung mit 270°-Horizontalumlenkung zu einem endseitigen Verleseband hin bilden, das vor dem Bunker angeordnet ist. Bei diesem in mehreren Phasen Umlenkungen des Gemisches erfordernden Förder- und Trennvorgang können bei ungünstiger Bodenlage, hohem Steingehalt, lehmigen und nassen Böden u. dgl. Bedingungen Förderstaus auftreten, so daß die Erntegeschwindigkeit zu reduzieren ist, die Durchsatzleistung entsprechend gering wird oder Beschädigungen von Bauteilen auftreten können.

Die Erfindung befaßt sich mit dem Problem, ein Trennaggregat für eine Kartoffelerntemaschine zu schaffen, bei dem mit geringem technischem Aufwand ungewollte Rückstaubildungen im Bereich von Trennstrecken sowie Überbelastungen einzelner Baugruppen vermeidbar sind, die Aussortierung von Steinen sowie Kluten verbessert wird und damit eine Leistungserhöhung der Maschine möglich ist.

Die Erfindung löst diese Aufgabe mit einer Ausführung der Kartoffelerntemaschine gemäß dem Anspruch 1. Weitere Ausgestaltungen der erfindungsgemäßen Maschine ergeben sich aus den Ansprüchen 2 bis 29.

Die Kartoffelerntemaschine ist mit einem Trennaggregat versehen, das in erfindungsgemäßer Ausführung eine den jeweils in die Trennstrecke zugeförderten Förderstrom für nachfolgende weitere Sortierungen optimal aufbereitende Gemischführung aufweist. Dazu werden zumindest zwei an sich bekannte Förderelemente vor einer Trennstrecke in einer das Gemisch weiterleitenden Übergabeposition zueinander so ausgerichtet, daß mit einfachen bzw. funktional verbesserten Bauteilen eine beim Weiterfördern nutzbare Vortrennung des Gemisches in zumindest zwei Teilförderströme in Abförderrichtung erreicht wird.

Die bei dieser in das Trennaggregat integrierten Vortrennung vorgesehenen Förderer werden durch anpaßbare Fördergeschwindigkeiten, -höhen und/oder -winkel in einer Übergabephase des Gemisches zum gezielten Eintrag kinetischer Energie auf die Knollen und Steinen sowie Kluten genutzt und dabei als Reaktion auf diese gezielte Beeinflussung des Gemisches die beiden Teilförderströme erzeugt. Mit geringem Aufwand kann das Gemisch aus einer insbesondere erhöhten Förderebene auf eine abgesenkt zu dieser liegende Aufnahmezone vor einer Trennstrecke verlagert werden, wobei durch ein in diese Übergabephase integriertes Brems- und/oder Prallelement den Teilen des Förderstroms kinetische Energie entzogen wird und die Vortrennung der Bestandteile erfolgt.

Dabei werden die Knollen in den von den Steinen und Kluten getrennten zweiten Förderstrom aussortiert, so daß in der sich in Förderrichtung anschließenden Trennphase eine optimale Trennung bzw. Ableitung der vorsortierten Knollen möglich wird. Eine weitere Verbesserung der Vortrennung ist dadurch erreichbar, daß durch eine Zusatzbaugruppe, beispielsweise ein Gebläse, die kinetische Vortrennung verstärkt wird.

Damit kann in jeder der an eine vortrennende Übergabephase anschließenden, auch bisher bei Maschinen dieser Art durchgeführten Trennphasen im Bereich von Trenngeräten eine optimale Auflockerung und Vorsortierung von Erntegut und Beimengungen so erfolgen, daß Förderstaus vermeidbar sind, ein kontinuierlicher Ernteablauf gewährleistet ist und mit dem Trennaggregat insgesamt bei weniger Aufwand am Verleseband eine höhere Leistung der Maschine erreicht wird.

Weitere Einzelheiten und vorteilhafte Wirkungen der Erfindung ergeben sich aus der nachfolgenden Beschreibung und den Zeichnungen, die ein Ausführungsbeispiel der erfindungsgemäß verbesserten Kartoffelerntemaschine veranschaulichen. In der Zeichnung zeigen:
- Fig. 1: eine Kartoffelerntemaschine gemäß dem Stand der Technik in Draufsicht,
- Fig. 2: eine Seitenansicht der Kartoffelerntemaschine gemäß Fig. 1,
- Fig. 3: eine Draufsicht der Kartoffelerntemaschine mit einem eine Trenn- strecke gemäß der Erfindung bildenden Trennaggregat,
- Fig. 4: eine vergrößerte Prinzipdarstellung des Trennaggregats gemäß Fig. 3 mit der erfindungsgemäßen Beschickung eines Trenngerätes in Draufsicht,
- Fig. 5: eine perspektivische Seitenansicht des Trennaggregats gemäß Fig. 4,
- Fig. 6: eine Seitenansicht ähnlich Fig. 5 mit einer Zusatzbaugruppe im Übergabebereich zum Trenngerät, und
- Fig. 7: eine perspektivische Konstruktionsdarstellung des Trennaggregats der Kartoffelerntemaschine gemäß Fig. 3.

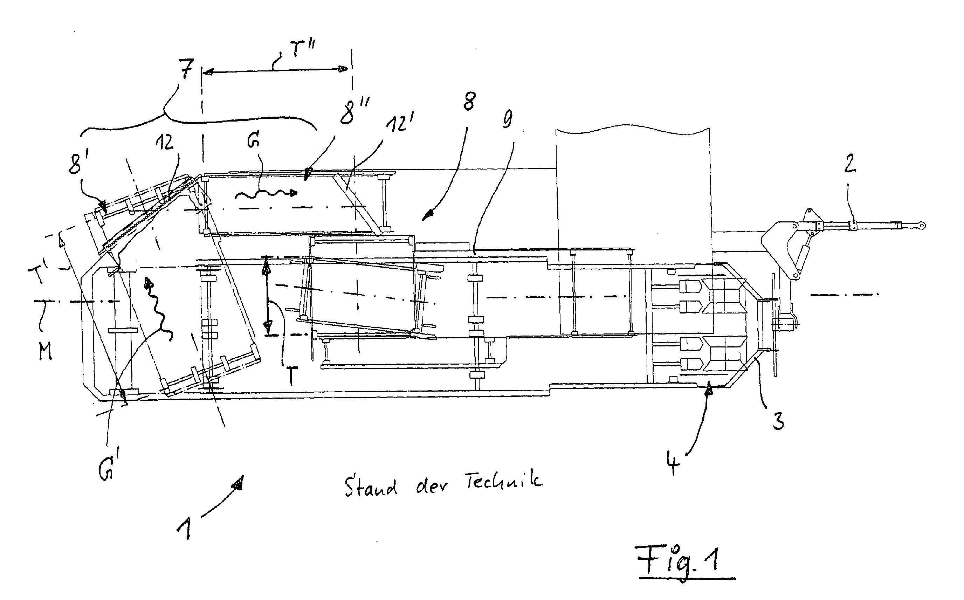

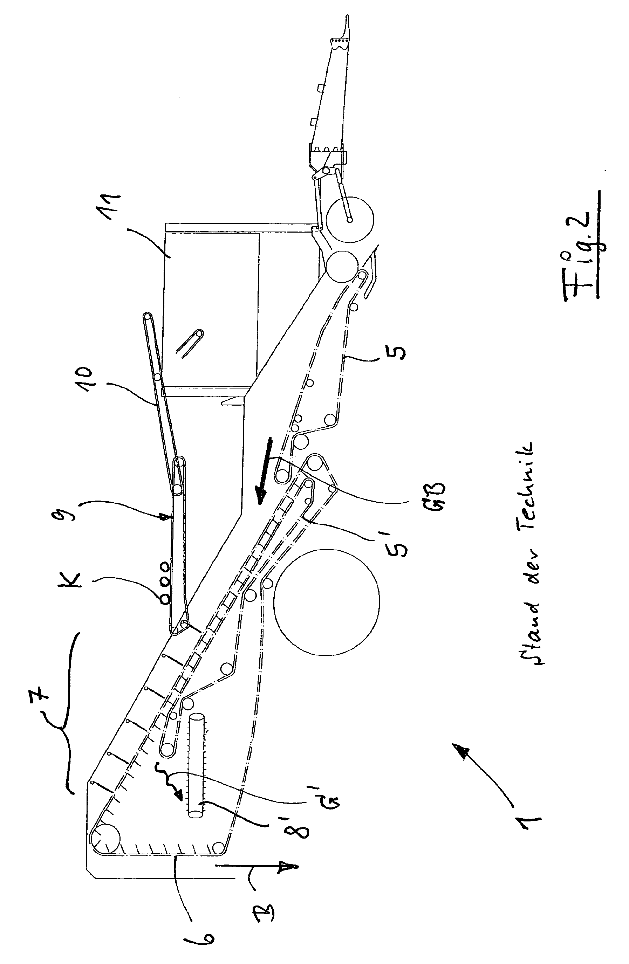

In Fig. 1 ist eine insgesamt mit 1 bezeichnete Kartoffelerntemaschine an sich bekannter Ausführung dargestellt, bei der nachgeordnet einer Anhängedeichsel 2 an einem Rahmen 3 eine zweireihige Rodevorrichtung 4 angeordnet ist. Von dieser aus wird ein sowohl Knollen als Erntegut als auch Steine, Kluten u. dgl. Beimengungen enthaltendes Gemisch (Pfeil GB, Fig. 2) über ein oder mehrere Siebförderbänder 5, 5' gefördert, wobei fasrige Bestandteile B mittels einer Krautkette 6 o. dgl. abförderbar sind. Das verbleibende Gemisch G' wird vom Siebförderband 5' aus einem insgesamt mit 7 bezeichneten Trennaggregat übergeben, wobei dieses zumindest ein eine Trennstrecke T definierendes Trenngerät 8 aufweist und damit aus dem Trennaggregat 7 im wesentlichen nur noch die Knollen K auf ein Verleseband 9 ausförderbar sind (Fig. 2). Von diesem Verleseband 9 aus können die Knollen K als Erntegut über einen Elevator 10 in einen Bunker 11 eingefördert werden bzw. einem nicht dargestellten Transportwagen zugeführt werden.

Bei dieser im wesentlichen den Stand der Technik in /2/ abbildenden Kartoffelerntemaschine 1 gemäß Fig. 1 und Fig. 2 wird das Gemisch G innerhalb des Trennaggregates 7 nach der im wesentlichen fahrtrichtungsparallelen Hochförderung (Fig. 2) vom Siebförderband 5' aus auf eine erste von mehreren, im dargestellten Fall drei in jeweiligen Winkellagen aneinander anschließende Teil-Trennstrecken T', T" und T hin verlagert und so das Gemisch G in mehreren Trenngeräten 8', 8", 8 im wesentlichen von den Beimengungen getrennt. In den jeweiligen Umlenkphasen zwischen diesen Trenngeräten sind Umlenkelemente 12, 12' vorgesehen, an denen Staubildungen und Gemischanhäufungen entstehen können, das abgeförderte Gemisch erfährt eine häufige Durchmengung und dabei können die Knollen durch Steine o. dgl. Beimengungen beschädigt werden. Bei Erntearbeiten auf nassen Böden mit hohem Anteil an Kluten oder beim Bearbeiten steiniger Böden weisen derartige in der Praxis bewährte Kartoffelerntemaschinen 1 /2/ deshalb noch Leistungsreserven auf.

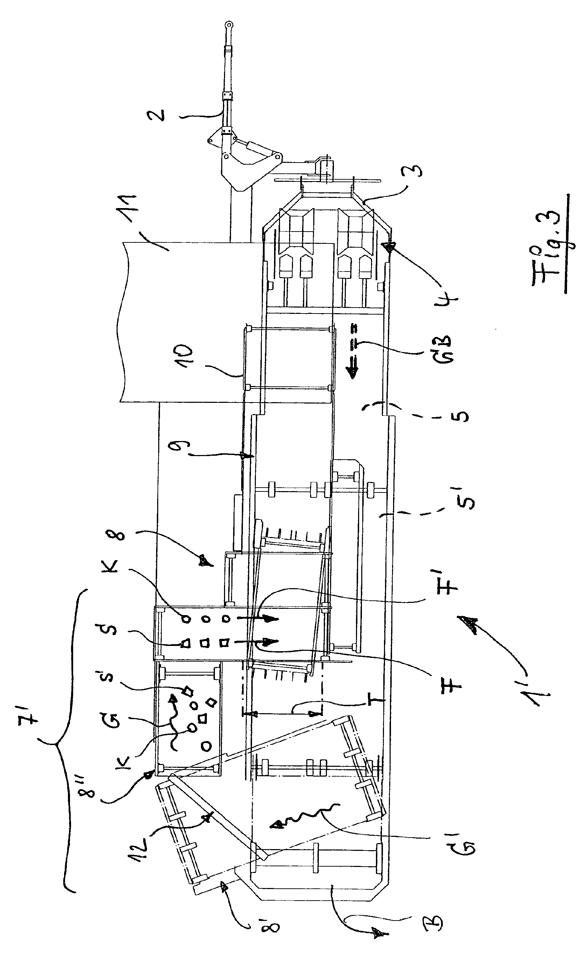

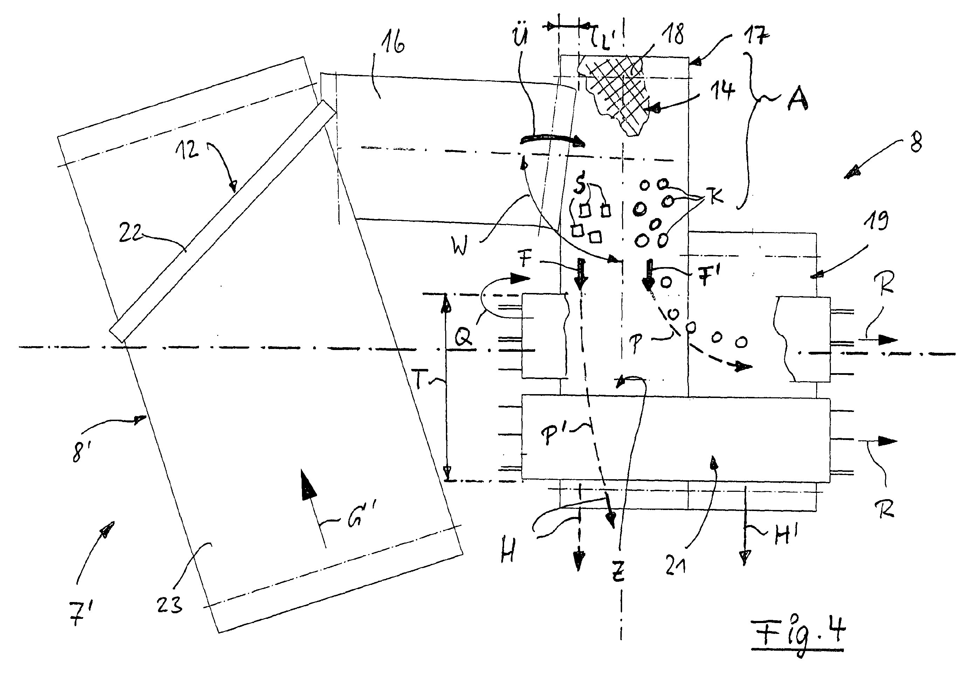

Bei der erfindungsgemäßen Ausführung der Kartoffelerntemaschine 1' (Fig. 3) ist ein verbesserte Leistungsparameter aufweisendes Trennaggregat 7' dadurch erreicht, daß zumindest im Bereich vor der Trennstrecke T das Gemisch G in zumindest zwei im wesentlichen nur Knollen K oder im wesentlichen nur Steine S und Kluten enthaltende Teilförderströme F und F' vortrennbar ist (Fig. 3, Fig. 4).

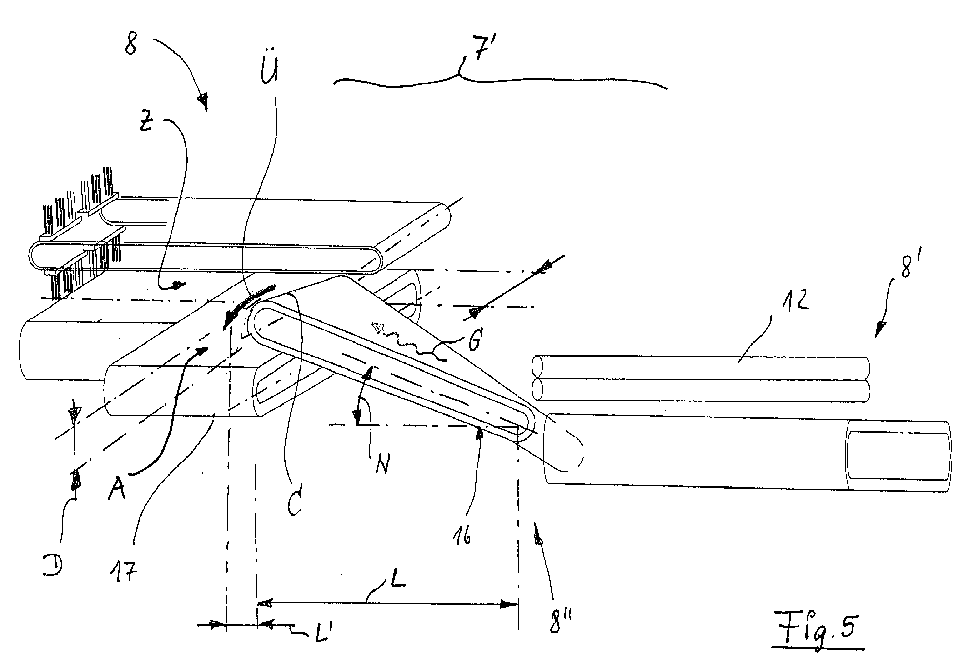

Das Trennaggregat 7' (Fig. 4, Fig. 5) ist dabei so konzipiert, daß die Bestandteile des Gemisches G beim Übergang vom Trenngerät 8" auf das Trenngerät 8 wahlweise durch eine Beschleunigungs- und/oder Bremskrafteinwirkung definiert so beeinflußt werden, daß zur weiteren Verarbeitung eine effiziente Vortrennung in die Teilförderströme F und F' erfolgt ist. Die technische Realisierung dieses überraschend effizienten Vortrenn-Prinzips ist weitgehend variabel, da das Gemisch innerhalb einer Übergabephase (Phase Ü, Fig. 4) zur an sich bekannten Trennstrecke T hin einer entsprechenden Trennwirkung aussetzbar ist und/oder erst unmittelbar vor Erreichen der an sich bekannten Trennstrecke T (in der die Knollen K aussortiert werden) die Vortrennung erfolgt.

In der gemäß Fig. 3 bis 7 dargestellten Ausführungsformen dieses Vortrenn-Prinzips wird zumindest eine Teilmenge des Gemisches G im Nahbereich vor der eigentlichen Trennstrecke T einer Aufnahmezone A zugeführt, wobei die Übergabe gemäß Pfeil Ü erfolgt und danach die beiden Teilförderströme F, F' unmittelbar in eine mit an sich bekannten Trennorganen versehene Trennzone Z der Trennstrecke T überführbar sind (Fig. 5). In einer nicht dargestellten Ausführung ist auch denkbar, daß ein mehrere Förderstufen aufweisendes Trennaggregat mit mehreren jeweils eine vorgelagerte Vortrennung aufweisenden Trennstrecken versehen wird.

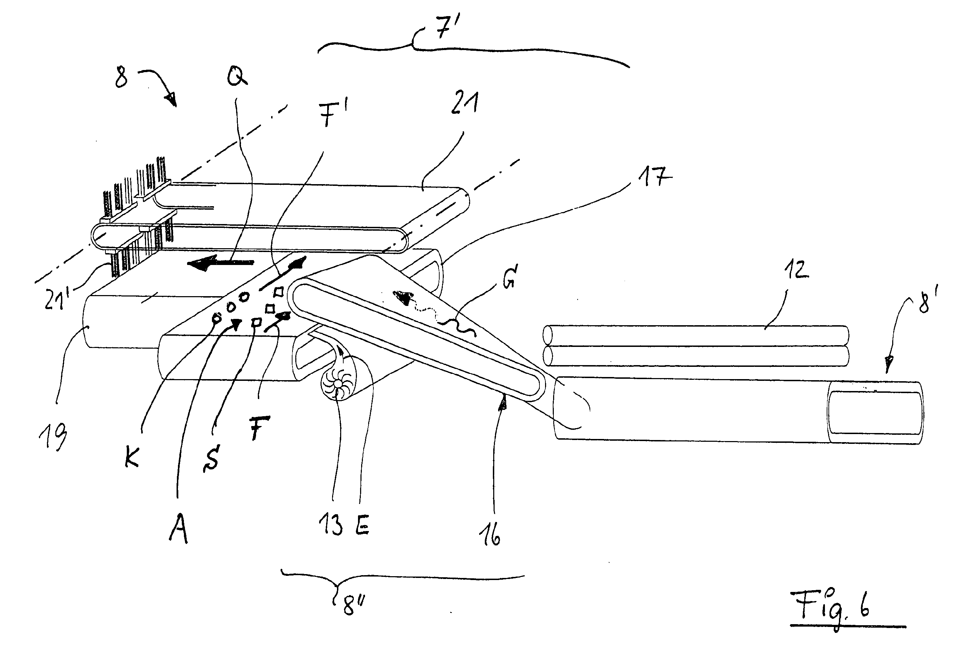

Die in Fig. 6 ersichtliche und auch mit Blick auf Fig. 5 gegenüber dem Stand der Technik (Fig. 1) erweiterte Ausführung des Übergangs zwischen Trenngerät 8" und 8 zeigt, daß das Gemisch G in der Übergabephase Ü und/oder beim Erreichen der Trennstrecke T bzw. der Aufnahmezone A durch einen zusätzlichen Energieträger E beaufschlagbar ist. Denkbar ist dabei, daß das Gemisch G durch eine Preßluft-und/oder Spritzwasserpumpe 13 beaufschlagt wird und damit im wesentlichen die Knollen K in den von Steinen und Kluten S des ersten Teilförderstromes F getrennten zweiten Teilförderstrom F' verlagerbar sind. Entsprechend der Konsistenz des Gemisches G kann der Energieträger E aus unterschiedlich einstellbaren Richtungen auf das Gemisch G geleitet werden. Unter Wirkung des Drucks der Luft bzw. des Wassers wird eine optimale Vortrennung insbesondere durch entsprechende Verteilung der Knollen K erreicht, da die Steine S durch ihr höheres Gewicht in Pfeilrichtung Ü mit weitgehend unveränderter Richtung in die Aufnahmezone A gelangen, die Knollen K jedoch "weiterrollen".

In konstruktiv optimaler Ausführung der Bauteile für die Vortrennung ist vorgesehen, daß das Gemisch G in der Aufnahmezone A zu zumindest einem durch eine Prall-und/oder Bremswirkung die Knollen K von den Steinen S und Kluten vortrennenden Bremselement 14 hin verlagerbar ist (Fig. 4). In Zusammenschau von Fig. 5 und 6 wird dabei deutlich, daß in der Aufnahmezone A sowohl der zusätzliche Energieeintrag E als auch das Bremselement 14 vorgesehen sein können, so daß auch eine Überlagerung der Trennwirkungen bzw. eine zweistufig nacheinander erfolgende Beeinflussung des Gemisches G und die "Rollverlagerung" der Knollen K bewirkt ist.

Die Zusammenschau von Fig. 3 und Fig. 4 zeigt, daß das zugeförderte Gemisch G ausgehend von der ersten Umlenkung 12 sowohl in der Übergabephase Ü als auch in der Aufnahmezone A eine im wesentlichen umlenkungsfreie Linearförderung aufweist, so daß in dieser Förderphase mit geringem Aufwand auch entsprechende Steuerbewegungen auf das Gemisch G einleitbar sind. Ausgehend von dieser Zuführung des Gemisches G in der Überleitungsphase Ü wird deutlich, daß die in der Aufnahmezone A aus dem eingeförderten Gemisch G nach Art einer Sortierung erzeugten Teilförderströme F, F' im wesentlichen parallel beabstandet sind, wobei diese beiden Teilförderströme F, F' in einer weitgehend beliebigen Winkellage W weiterleitbar sind. In der dargestellten Ausführung beträgt der Winkel W ca. 90°, wobei auch abweichende Lagen, beispielsweise im Bereich von 45° bis 135° (nicht dargestellt) denkbar sind. Diese beispielhaft gezeigte Erzeugung der Teilförderströme F, F' wird für die weitere Aussortierung der Kartoffeln K zum Verleseband 9 hin genutzt.

Unabhängig von der vorbeschriebenen Ausführung des Trennaggregates 7' ist denkbar, daß zusätzlich zur dargestellten Übergabe Ü auch vorgeordnete oder nachfolgende Übergabephasen nach Art einer Vortrennung (nicht dargestellt) auf das Gemisch bzw. die beiden Teilförderströme F, F' einwirken oder eine autarke Vortrenn-Vorrichtung konzipiert wird (nicht dargestellt).

Für die konstruktive Realisierung des vorstehend prinzipiell dargestellten Vortrenn-Prozesses wird ein das Gemisch G in die Aufnahmezone A zuführendes, in weitgehend beliebigen Ausführungen einsetzbares Zuführförderband 16 genutzt, das mit einem insgesamt mit 17 bezeichneten Abführförderband in der Aufnahmezone A zusammenwirkt. Die Perspektivdarstellungen gemäß Fig. 5 und 6 zeigen, daß das Zuführförderband 16 eine oberhalb des Abführförderbandes 17 in einem Abstand C befindliche Abwurfebene D definiert. Mit dieser Anordnung kann eine effektive Vortrennung dadurch erreicht werden, daß das Abführförderband 17 in der einen Aufprall- bzw. Bremsbereich definierenden Auflagezone A eine das in Richtung Ü zugeförderte Gemisch G aufnehmende Elastomerauflage 18 als Bremselement 14 aufweist, das beispielsweise in Form eines Gummifingerbandes o. dgl. Strukturen ausgebildet ist (kreuzschraffierte Ausschnittsdarstellung in Fig. 4).

Mit dieser Gestaltung der Aufnahmezone A bzw. der Elastomerauflage 18 des Abführförderbandes 17 wird ein auf ein jeweiliges Gewicht von Knollen K bzw. von Steinen S reagierendes Federungsverhalten des Systems genutzt, um eine Sortierung des Gemisches G zu erreichen. In umfangreichen Versuchen wurden die Teile dieser Übergabe- und Übernahmekonstruktion so optimiert, daß das sich vom Zuführförderband 16 lösende Gemisch G beim Aufprall seiner Bestandteile durch deren unterschiedliche Einsinktiefen, deren Prallverhalten und/oder deren Rollverlagerungen in die beiden Teilförderströme F, F' vorgetrennt wird, wie dies vereinfacht in Fig. 4 mit jeweiligen Kreis- bzw. Rechtecksymbolen für die Knollen K und die Steine S veranschaulicht ist.

Zur optimalen Steuerung dieses Trennvorganges ist vorgesehen, daß das Zuführförderband 16 eine zur Aufnahmezone A des Abführförderbandes 17 hin veränderte Einbaulage und/oder variierbare Förderleistungen aufweist. Denkbar ist dabei, das Zuführförderband 16 variabel in Bezug auf eine Länge L auszuführen, so daß über dem Abführförderband 17 unterschiedliche Überdeckungen L' gebildet sind (Fig. 5). Ebenso ist vorgesehen, das Band 16 in unterschiedlichen Neigungswinkeln N zum Abführförderband 17 hin auszurichten, so daß damit die Abwurfebene C mit entsprechend geänderten Höhen-Abständen D oberhalb des nachgeordneten Abführförderbandes 17 liegt. Ebenso ist denkbar, das Zuführförderband 16 mit einem Antrieb zu versehen, mit dem unterschiedliche Fördergeschwindigkeiten erzeugbar sind.

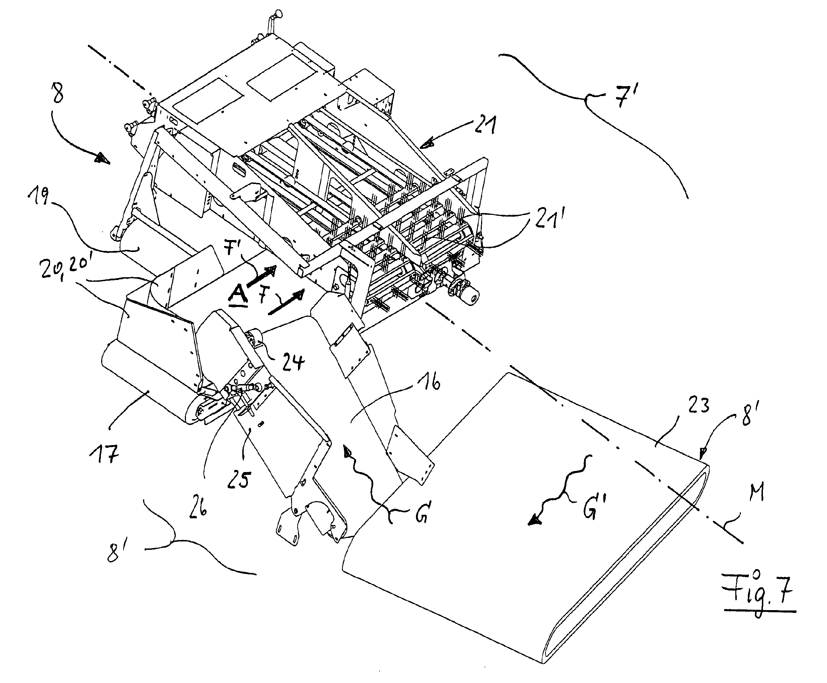

Ausgehend von dem vorbeschriebenen Trennsystem verdeutlicht die Zusammenschau von Fig. 3 und 7 weitere Einzelheiten des die Vortrennung nutzenden Trennaggregates 7'. Das die beiden Teilförderströme F, F' aufnehmende Abführförderband 17 ist dabei als Teil eines 2-phasigen Trenngerätes 8 mit einem zusätzlichen Übernahmeband 19 vorgesehen. Vom Zuführförderband 16 aus gelangt das Gemisch G auf das - im Vergleich zum Stand der Technik (Fig. 1) quer zur Längsmittelebene M der Maschine 1' verlängerte - Abführförderband 17, bei dem die Aufnahmezone A mit entsprechenden seitlichen Fangblechen 20, 20' als eine effiziente "Rollbegrenzung" vorgesehen ist (Fig. 7). Davon ausgehend werden die beiden in dieser Phase gebildeten Teilförderströme F, F' mittels des Abführförderbandes 17 zu der an sich bekannten Trennstrecke T mit einer nunmehr zweiten (an sich bekannten) Trennphase überführt, in der sich die Vorteile der Vortrennung F, F' auswirken.

In dieser zweiten Trennphase (bei Z, Fig. 4) wird quer zur Zuführrichtung der beiden Teilförderströme F, F' eine Schubkraftkomponente entsprechend Bewegungspfeil Q (Fig. 6) - bezogen auf eines der Abstreifelemente 21' - aufeinanderfolgend zuerst auf die im Teilförderstrom F befindlichen Steine S eingeleitet, wobei diese durch ihr vergleichsweise hohes Gewicht so in der Elastomerauflage 18 gehalten sind, daß die Mitnahmekraft der Bewegung Q weitgehend unwirksam ist und die Steine und Kluten S weitgehend ohne Richtungswechsel mit dem Abführförderbad 17 in einer Förderkurve P' weiterbewegt und auf eine nicht näher dargestelltes Beimengenband o. dgl. ausgefördert werden (Pfeil H, Fig. 4).

Die Schubkraftkomponente wirkt entsprechend der Bewegung Q (umlaufende Bewegung) in einer zweiten Phase mittels der Abstreifelemente 21' auf die bereits in Abförderrichtung zum Verleseband 9 vorn liegenden Knollen K ein, wobei diese aufgrund ihres geringeren Gewichtes auf der Elastomerauflage 18 nur gering gebremst sind bzw. so weit oben liegen, daß unter Wirkung der Bewegung Q die Abförderung entsprechend einer kurzen Förderkurve P über das parallele Übernahmeband 19 hinweg bis in den Bereich des Verlesebandes 9 erfolgen kann (Pfeil R, Fig. 4).

Die dabei auf das Übernahmeband 19 gerollten oder mitgezogenen Steine und Kluten S können durch das elastische Verhalten des Übernahmebandes 19 gebremst und ebenfalls in das Beimengenband (Pfeil H') abgeleitet werden; nur Reste der Steine S gelangen zur endgültigen Sortierung auf das Verleseband 9, so daß eine überaus saubere Sortierung wenig Nacharbeit erfordert. Durch Tests an einem Prototypen der Maschine 1 wurde nachgewiesen, daß die Trenngüte ausgehend von einem Vergleichswert von ca. 60 % bei bekannten Trenngeräten auf ca. 80 % verbessert ist.

Das Trennaggregat 7' der Maschine 1' (Fig. 3, Fig. 7) weist ein zur Maschinenlängsmittelebene M im wesentlichen quergerichtetes erstes Trenngerät 8' mit einem Förderstrom G' ohne Vortrennung auf. An diesen schließt sich ein zweites, im wesentlichen nur noch die Knollen K sowie Steine S und Kluten als Gemisch G aufnehmendes Trenngerät 8" mit dem Zuführförderband 16 an. Von diesem aus wird das Gemisch G unmittelbar in Form der beiden Teilförderströme F, F' dem als Teil des dritten Trenngerätes 8 vorgesehenen Abführförderbandes 17 übergeben. Die Weiterverarbeitung der beiden vorgetrennten parallelen Teilförderströme F, F' erfolgt ersichtlich in der Trennstrecke des dritten Trenngerätes 8, wobei hier ein Bürstenband o. dgl. Abstreifer 21 mit Elementen 21' sowohl die im wesentlichen vorgetrennten Knollen K vom Abführförderband 17 ablenkt als auch die Ausförderung der Knollen K vom Übernahmeband 19 auf das Verleseband 9 bewirkt.

Das Trenngerät 7' zeichnet sich dadurch aus, daß die hintereinander angeordneten Trennstrecken eine im wesentlichen horizontale Umlenkung bewirken, wobei am Ende des das Gemisch G aufnehmenden ersten Trenngerätes 8' eine Doppelabstreifwalze 22 oberhalb eines Förderbandes 23 angeordnet ist, derart, daß auf dem anschließenden Zuführförderband 16 ein zur erfindungsgemäßen Vortrennung bereits aufgelockertes Gemisch G aufnehmbar ist und damit die vorbeschriebene Vortrennung noch effizienter ausgeführt werden kann.

Die Einzeldarstellung des Trenngerätes 7' gemäß Fig. 7 verdeutlicht zusätzliche bzw. in der vorhergehenden Beschreibung bereits angesprochene Einzelbaugruppen im Bereich der Bänder 16 und 17. Das Zuführförderband 16 ist dabei mit einem auch separat steuerbaren Antriebsmotor 24 versehen und im Bereich einer Halterung 25 kann das Zuführförderband 16 mittels eines hydraulischen Stellorgans 26 in seiner Neigung N (Fig. 5) an die vorgesehenen Vortrenn-Bedingungen angepaßt werden. Die beiden in der Aufnahmezone A benachbarten Bänder 17 und 19 bilden die vorbeschriebene zweiteilige Fördereinheit, wobei entsprechend der Roll-und/oder Bremszone bei A entsprechende an sich bekannte Igel- oder Gumminoppenbänder verwendet werden. Im Bereich des Abstreifers 21 ist die Anwendung entsprechender Bürsten- und/oder Gummifingerbänder mit den Abstreifelementen 21' denkbar.

Das weiterentwickelte Trenngerät 7' ist besonders vorteilhaft für steinige Bodenverhältnisse einsetzbar. Das weitgehend von Erde und Feinkrautresten getrennte Gemisch G durchläuft im Bereich des Trenngerätes 8 eine mit der Vortrennung vorteilhafte 2-stufige Bearbeitungszone, wobei durch die Integration der kinematischen Vortrennung in die Trennphase des Trenngerätes 8 mit insbesondere Gummifingerband eine schonende Sortierung erreicht wird.

Dabei wird das Gemisch G mit einer definierten Geschwindigkeit auf das als weiches Gummifingerband ausgeführte Abführförderband 17 übergeben, so daß basierend auf unterschiedlichen Rollwiderständen, variierenden runden oder eckigen Umfangskonturen und unterschiedlichen spezifischen Gewichten eine gebremste "Rolltrennung" der Knollen K erfolgt, wobei diese auf dem vergleichsweise weichen Gummifingerband weiterverlagert werden als die nahe der Übergabezone Ü verbleibenden Steine S. Bei der nachfolgenden Bürstentrennung mittels der Gummifinger als Abstreifer 21 wirkt sich der Unterschied im spezifischen Gewicht von Knollen K und Steinen S als Trennhilfe aus. Auf das in der Trennzone Z befindliche, zweite parallel laufende Gummifingerband 19 werden nur noch im wesentlichen die bei der Vortrennung nach vorn geförderten Knollen K mittels des obenliegenden Bürstenbandes mitgenommen und gelangen auf das Verleseband 9. Gleichzeitig verbleiben die Steine S auf den Gummifingerbändern 17, 19 und werden ausgefördert.

## Patentansprüche

1. Kartoffelerntemaschine, mit einer ein- oder mehrreihigen Rodevorrichtung (4) sowie einem an diese anschließenden und ein Gemisch (G) aus Knollen (K) als Erntegut mit Steinen, Kluten u. dgl. Beimengungen (S) aufnehmenden Siebförderband (5, 5'), von dem aus das geförderte Gemisch (G) einem zumindest ein eine Trennstrecke (T) definierendes Trenngerät (8) aufweisenden und im wesentlichen nur noch die Knollen (K) auf ein Verleseband (9) ausfördernden Trennaggregat (7) übergebbar ist, **dadurch gekennzeichnet, daß** im Bereich vor der Trennstrecke (T) das Gemisch (G) in zumindest zwei im wesentlichen nur Knollen (K) oder im wesentlichen nur Steine (S) und Kluten enthaltende Teilförderströme (F, F') vortrennbar ist.

2. Kartoffelerntemaschine nach Anspruch 1, **dadurch gekennzeichnet, daß** die Bestandteile (K, S) des Gemisches (G) durch eine Beschleunigungs- und/oder Bremskrafteinwirkung vortrennbar sind.

3. Kartoffelerntemaschine nach Anspruch 1 oder 2, **dadurch gekennzeichnet, daß** das Gemisch (G) in einer Übergabephase (Ü) zur und/oder unmittelbar vor Erreichen der Trennstrecke (T) die zumindest eine Vortrennung im Trennaggregat (7) durchläuft.

4. Kartoffelerntemaschine nach einem der Ansprüche 1 bis 3, **dadurch gekennzeichnet, daß** zur Vortrennung zumindest einer Teilmenge des Gemisches (G) eine dieses im Nahbereich der Trennstrecke (T) übernehmende Aufnahmezone (A) vorgesehen ist.

5. Kartoffelerntemaschine nach einem der Ansprüche 1 bis 4, **dadurch gekennzeichnet, daß** nach der Übergabephase (Ü) die zumindest zwei im wesentlichen jeweils nur Knollen (K) oder nur Steine (S) und Kluten enthaltenden Teilförderströme (F, F') unmittelbar in eine nachfolgende Trennzone (Z) der Trennstrecke (T) überführbar sind.

6. Kartoffelerntemaschine nach einem der Ansprüche 1 bis 5, **dadurch gekennzeichnet, daß** das Trennaggregat (7') mit mehreren jeweils eine vorgelagerte Vortrennung aufweisenden Trennstrecken (T) versehen ist.

7. Kartoffelerntemaschine nach einem der Ansprüche 1 bis 6, **dadurch gekennzeichnet, daß** das Gemisch (G) in der Übergabephase (Ü) und/oder beim Erreichen der Trennstrecke (T) in der Aufnahmezone (A) durch einen zusätzlichen Energieträger (E) beaufschlagbar ist und damit im wesentlichen die Knollen (K) in den von Steinen (S) und Kluten des ersten Teilförderstroms (F) getrennten zweiten Teilförderstrom (F') verlagerbar sind.

8. Kartoffelerntemaschine nach Anspruch 7, **dadurch gekennzeichnet, daß** das Gemisch (G) mit Preßluft und/oder Spritzwasser (13) beaufschlagbar ist.

9. Kartoffelerntemaschine nach Anspruch 7 oder 8, **dadurch gekennzeichnet, daß** der mit unterschiedlichem Druck einstellbare Energieträger (E) aus unterschiedlich einstellbaren Richtungen auf das Gemisch einwirkt.

10. Kartoffelerntemaschine nach einem der Ansprüche 1 bis 6, **dadurch gekennzeichnet, daß** das Gemisch (G) in der Aufnahmezone (A) zu zumindest einem durch eine Prall- und/oder Bremswirkung die Knollen (K) von den Steinen (S) und Kluten vortrennenden Bremselement (14) hin verlagerbar ist.

11. Kartoffelerntemaschine nach einem der Ansprüche 1 bis 10, **dadurch gekennzeichnet, daß** im Bereich der Aufnahmezone (A) sowohl der zusätzliche Energieeintrag (E) als auch das Bremselement (14) wirksam sind.

12. Kartoffelerntemaschine nach einem der Ansprüche 1 bis 11, **dadurch gekennzeichnet, daß** in der Übergabephase (Ü) bis zur Aufnahmezone (A) hin eine im wesentlichen umlenkungsfreie Linearförderung des Gemisches (G) vorgesehen ist.

13. Kartoffelerntemaschine nach einem der Ansprüche 1 bis 12, **dadurch gekennzeichnet, daß** die in der Aufnahmezone (A) aus dem eingeförderten Gemisch (G) nach Art einer Sortierung erzeugten zwei Teilförderströme (F, F') im wesentlichen parallel beabstandet verlaufen.

14. Kartoffelerntemaschine nach einem der Ansprüche 1 bis 13, **dadurch gekennzeichnet, daß** die beiden in der Aufnahmezone (A) parallel gebildeten Teilförderströme (F, F') in einer Winkellage (W) von 45° bis 135°, vorzugsweise 90°, zur Übergaberichtung des Gemisches (G) weiterleitbar und in die Trennzone (Z) einförderbar sind.

15. Kartoffelerntemaschine nach einem der Ansprüche 1 bis 14, **dadurch gekennzeichnet, daß** die erzeugten Teilförderströme (F, F') ihrerseits in zumindest einer nachfolgenden Übergabephase nach Art einer zweiten Vortrennung weiterbewegbar sind.

16. Kartoffelerntemaschine nach einem der Ansprüche 1 bis 15, **dadurch gekennzeichnet, daß** ein das Gemisch (G) in die Aufnahmezone (A) zuführendes Zuführförderband (16) eine oberhalb eines anschließenden Abführförderbandes (17) befindliche Abwurfebene (C) definiert.

17. Kartoffelerntemaschine nach einem der Ansprüche 1 bis 16, **dadurch gekennzeichnet, daß** das Abführförderband (17) zumindest im Aufprallbereich des zugeförderten Gemisches (G) mit einer Elastomerauflage (18) versehen ist.

18. Kartoffelerntemaschine nach einem der Ansprüche 1 bis 17, **dadurch gekennzeichnet, daß** die Elastomerauflage (18) des Abführförderbandes (17) ein auf ein jeweiliges Gewicht von Knollen (K) bzw. von Steinen (S) reagierendes Federverhalten aufweist, derart, daß das sich vom Zuführförderband (16) lösende Gemisch (G) beim Aufprall seiner Bestandteile durch deren unterschiedliche Einsinktiefen, deren Prallverhalten und/oder deren Rollverlagerungen in die beiden Teilförderströme (F, F') vortrennbar ist.

19. Kartoffelerntemaschine nach einem der Ansprüche 1 bis 18, **dadurch gekennzeichnet, daß** das Zuführförderband (16) eine zur Aufnahmezone (A) des Abführförderbandes (17) hin veränderbare Einbaulage und/oder variierbare Förderleistungen aufweist.

20. Kartoffelerntemaschine nach Anspruch 19, **dadurch gekennzeichnet, daß** das Zuführförderband (16) längenvariabel einstellbar ist.

21. Kartoffelerntemaschine nach Anspruch 19 oder 20, **dadurch gekennzeichnet, daß** das Zuführförderband (16) mit unterschiedlichem Neigungswinkel (N) zum Abführförderband (17) hin einstellbar ist.

22. Kartoffelerntemaschine nach einem der Ansprüche 19 bis 21, **dadurch gekennzeichnet, daß** das Zuführförderband (16) auf unterschiedliche Abwurfebenen (C) oberhalb des nachgeordneten Abführförderbandes einstellbar ist.

23. Kartoffelerntemaschine nach einem der Ansprüche 19 bis 22, **dadurch gekennzeichnet, daß** das Zuführförderband (16) auf unterschiedliche Fördergeschwindigkeiten einstellbar ist.

24. Kartoffelerntemaschine nach einem der Ansprüche 1 bis 23, **dadurch gekennzeichnet, daß** das die beiden Teilförderströme (F, F') aufnehmende Abführförderband (17) als Teil eines 2-phasigen Trenngerätes (8) mit einem im wesentlichen parallelen Übernahmeband (19) vorgesehen ist.

25. Kartoffelerntemaschine nach Anspruch 24, **dadurch gekennzeichnet, daß** die in der ersten Phase gebildeten beiden Teilförderströme (F, F') mittels des Abführförderbandes (17) in eine an sich bekannte Trennstrecke (T) mit einer zweiten Trennphase (Z) überführbar sind, in der quer zur Zuführrichtung der beiden Teilförderströme (F, F') eine Schubkraftkomponente (Q) nacheinander auf die Steine (S) und dann auf die Knollen (K) einwirkt.

26. Kartoffelerntemaschine nach Anspruch 24 oder 25, **dadurch gekennzeichnet, daß** in dem 2-phasigen Trenngerät (8) im wesentlichen nur die Knollen (K) auf das Übernahmeband (19) verlagerbar sind und die Steine (S) einer Beimengungenbahn (H, H') übergebbar sind.

27. Kartoffelerntemaschine nach einem der Ansprüche 1 bis 26, **dadurch gekennzeichnet, daß** das Trennaggregat (7') der Maschine (1') ein zur Maschinenlängsmittelebene (M) im wesentlichen quergerichtetes erstes Trenngerät (8') mit einem Förderstrom (G') ohne Vortrennung aufweist, an dieses sich ein zweites im wesentlichen nur noch Knollen (K) sowie Steine (S) und Kluten als Gemisch (G) übernehmendes Trenngerät (8") mit dem Zuführförderband (16) anschließt und von diesem aus das Gemisch (G) unmittelbar dem die beiden Teilförderströme (F, F') auf dem als Teil eines dritten Trenngerätes (8) vorgesehenen Abführförderband (17) übergebbar ist.

28. Kartoffelerntemaschine nach Anspruch 27, **dadurch gekennzeichnet, daß** die Knollen (K) und die Steine (S) als die zwei im wesentlichen vorgetrennten parallelen Teilförderströme (F, F') in die Trennstrecke (T) des dritten Trenngerätes (8) einleitbar sind und hier ein Bürstenband o. dgl. Abstreifer (21) sowohl die im wesentlichen vorgetrennten Knollen (K) vom Abführförderband (17) ablenkt als auch die Ausförderung (Pfeil R) der Knollen (K) vom Übernahmeband (21) auf das Verleseband (9) bewirkt.

29. Kartoffelerntemaschine nach Anspruch 27 oder 28, **dadurch gekennzeichnet, daß** am Ende des das Gemisch (G) horizontal aufnehmenden ersten Trenngerätes (8') eine Doppelabstreifwalze (22) oberhalb eines Förderbandes (23) angeordnet ist, derart, daß auf dem anschließenden Zuführförderband (16) ein zur Vortrennung bereits aufgelockertes Gemisch (G) aufnehmbar ist.
